Europäisches Patentamt

(19) European Patent Office

Office européen des brevets

(11) Numéro de publication : **0 085 020**
**B1**

(12) **FASCICULE DE BREVET EUROPÉEN**

(45) Date de publication du fascicule du brevet :
**07.05.86**

(51) Int. Cl.⁴ : **C 23 C   2/24**

(21) Numéro de dépôt : **83630014.5**

(22) Date de dépôt : **21.01.83**

(54) **Procédé de traitement d'objets longitudinaux au cours d'une opération de métallisation à chaud.**

(30) Priorité : **26.01.82 LU 83897**

(43) Date de publication de la demande :
**03.08.83 Bulletin 83/31**

(45) Mention de la délivrance du brevet :
**07.05.86 Bulletin 86/19**

(84) Etats contractants désignés :
**AT BE DE FR GB IT NL SE**

(56) Documents cités :
**FR-A- 2 412 109**
**US-A- 3 518 109**

(73) Titulaire : **Metz, Paul**
**18 rue J.P. Brasseur**
**L-1258 Luxembourg (LU)**

(72) Inventeur : **Metz, Paul**
**18 rue J.P. Brasseur**
**L-1258 Luxembourg (LU)**

Jouve, 18, rue St-Denis, 75001 Paris, France

## Description

La présente invention concerne un procédé de traitement d'objets longitudinaux, notamment filiformes, au cours d'une opération de métallisation à chaud.

Il existe de nombreux procédés de recouvrement au moyen de produits ou d'alliages métalliques qui prévoient le passage du produit à recouvrir par un bain de métal liquide qui se dépose en une couche plus ou moins épaisse sur le produit à recouvrir. Le procédé le plus connu utilisant cette technique est le procédé de galvanisation du fer ou de l'acier, tant sous forme de produits plats que de fils, que l'on fait passer en continu par un bain de zinc ou d'alliage de zinc, porté à une température suffisante.

Le principe de ce procédé s'applique aux métaux les plus divers, tant en ce qui concerne le produit à recouvrir que le métal de recouvrement ; ainsi il est bien connu de déposer de cette manière les métaux les plus variés, tels le cuivre, l'aluminium, le nickel, l'étain, le chrome, le plomb, etc. sur des produits à base de fer, tout comme il est possible de déposer de cette manière de l'argent ou même de l'or sur des métaux de base ou des alliages de base les plus divers, tels le cuivre, le laiton, etc.

Les procédés de recouvrement au moyen de métaux liquides ne s'appliquent pas seulement au dépôt de métal sur métal, mais également de métal sur des produits non métalliques, tels le verre, le graphite et autres.

Le procédé de recouvrement d'un métal de base au moyen d'un produit métallique s'applique également à la fabrication de produits métalliques au départ d'un seul et même métal ; c'est ainsi, qu'il est bien connu de fabriquer par ex. des fils de cuivre selon un procédé qui consiste à faire passer une ou plusieurs fois un fil de cuivre de faible diamètre à travers un bain de cuivre liquide, où le cuivre se dépose sur le fil de faible diamètre pour former finalement un fil de cuivre uniforme et de forte épaisseur.

Tous ces procédés de recouvrement ont un problème commun ; celui de la régulation de l'épaisseur du produit déposé et de la qualité de ce dépôt. Le but de l'invention consistait à proposer un procédé permettant d'éviter ces défauts et les problèmes de qualité d'une manière extrêmement simple et efficace.

Ce but est atteint par le procédé selon l'invention, qui prévoit de soumettre le métal de couverture à la sortie du bain métallique liquide, alors que le métal de recouvrement est lui-même encore liquide, à un champ magnétique tel qu'il induise dans le métal de couverture des mouvements directionnels. Le procédé prévoit en particulier que l'on soumet l'objet (F), en voie de déplacement à travers un bain (B) de métal (M) suivant un sens (D), à l'action (A) de champs électromagnétiques en vue d'influencer la phase liquide de métal de recouvrement, caractérisé en ce que l'on crée un champ électromagnétique (H) hélicoïdal qui agit autour de l'axe de l'objet (F) et qui induit en même temps dans le bain (B) un mouvement de rotation (R).

Le mouvement directionnel parallèle au produit à recouvrir, selon l'état de la technique, prend la même direction que le produit à recouvrir, lorsqu'il s'agit, d'augmenter l'épaisseur du revêtement et il prend un mouvement opposé à celui du métal à recouvrir, lorsqu'il s'agit de diminuer l'épaisseur du revêtement. Il fut trouvé en effet que le mouvement induit, appliqué dans le sens du mouvement du produit à recouvrir, aspirait en quelque sorte le métal liquide hors du bain, ce qui permettait de figer une épaisseur plus forte de métal sur le produit à recouvrir dans la zone froide superposée au métal, alors qu'un mouvement induit, opposé au sens de mouvement du produit à recouvrir, repoussait le métal liquide entraîné par le produit à recouvrir vers le bain de métal liquide et provoquait de ce fait une diminution de l'épaisseur de recouvrement. On voit que l'application judicieuse permet une régulation simple et efficace de l'épaisseur de recouvrement.

Grâce à l'application d'un champ de forme hélicoïdale on arrive à améliorer d'une manière très sensible la qualité et l'homogénéité du métal de couverture, en en évitant la formation de traces que produiraient des champs simplement tournants.

L'application de ce principe s'avère extrêmement utile lors du recouvrement de produits à section sensiblement circonférentielle tels les fils ou des sections octogonales, etc., mais elle est également d'une grande utilité lors du recouvrement de produits plats.

Le mouvement induit selon le procédé suivant l'invention, peut être créé exclusivement au-dessus de la surface du bain métallique de recouvrement, mais il peut, selon l'invention, commencer de préférence également ou se produire exclusivement à l'intérieur du bain métallique, grâce à des inducteurs éventuellement refroidis ou chauffés, introduits dans le bain métallique et au travers desquels passe le produit à recouvrir.

En plus les inducteurs plongeant dans le bain, peuvent contribuer à augmenter ou à maintenir la température du bain métallique aux environs du produit à revêtir. Pour favoriser une épaisseur accrue de la couche de métal liquide entraînée et pour augmenter ainsi la plage des épaisseurs réalisables suivant les méthodes connues, il peut être avantageux, suivant l'invention, de refroidir la zone de sortie du bain. Les inducteurs peuvent être logés dans des boîtiers refroidis, plongeant dans le bain et/ou dépassant le bain ou encore se trouvant dans la zone de la sortie du bain et contribuer ainsi au refroidissement, donc à la solidification accélérée du métal de recouvrement.

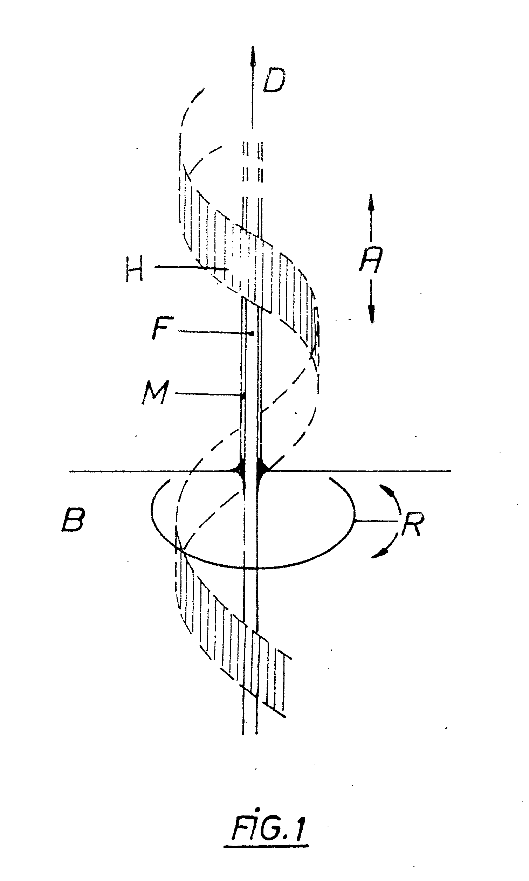

Le principe du procédé suivant l'invention sera expliqué à l'aide du dessin où la fig. 1 représente de manière schématisée un fil (F) se déplaçant dans un sens (D) et sortant d'un bain de métal (B). Le fil est muni d'un dépôt de métal (M). Suivant l'invention, le fil et le bain sont soumis à l'action d'un champ magnétique (H) de forme hélicoïdale.

Ce champ (H) est positionné de manière à agir, soit dans le sens (D), pour augmenter l'épaisseur de la couche (M) de métal déposé sur le fil, soit dans le sens contraire à (D) pour diminuer ladite épaisseur.

Que le champ hélicoïdal agisse vers le haut ou vers le bas, il induit dans le bain et plus particulièrement à la surface, un mouvement de rotation (R). Ce dernier est favorable pour ce qui est de l'éloignement d'impuretés qui peuvent se trouver à la surface du bain et qui, sans la mise en rotation du métal autour du fil, risqueraient de se coller à ce dernier, ce qui affecterait la qualité du fil métallisé.

Pour créer le champ magnétique hélicoïdal, il suffit de mettre en œuvre un inducteur multi-pôle dans lequel la position des différents pôles, suit une ligne hélicoïdale qui évolue autour de l'axe de l'inducteur.

## Revendications

1. Procédé de traitement d'objets longitudinaux, notamment filiformes, au cours d'une opération de métallisation à chaud, lequel procédé prévoit que l'on soumet l'objet (F) en voie de déplacement à travers un bain (B) de métal (M) suivant un sens (D), à l'action (A) de champs électromagnétiques en vue d'influencer la phase liquide de métal de recouvrement, caractérisé en ce que l'on crée un champ électromagnétique (H) hélicoïdal qui agit autour de l'axe de l'objet (F) et qui induit en même temps dans le bain (B) un mouvement de rotation (R).

2. Procédé suivant la revendication 1, caractérisé en ce que l'on positionne le champ (H) de manière à ce qu'il agisse dans le bain ainsi qu'au-dessus du bain.

3. Procédé suivant les revendications 1 et 2, caractérisé en ce que l'on oriente le champ (H) de manière à ce qu'il agisse dans le sens (D) pour augmenter l'épaisseur de la couche de métal (M) déposée et dans le sens contraire à (D) pour diminuer ladite épaisseur.

4. Procédé suivant les revendications 1-3, caractérisé en ce que l'on met en œuvre des inducteurs encastrés dans des boîtiers de protection contre le métal liquide et que l'on prévoit à l'intérieur desdits boîtiers des moyens de chauffage ou de refroidissement.

## Claims

1. Method for treating elongated bodies, especially wire shaped bodies, during a hot metallization operation, which method provides for submitting the bodies (F), being displaced through a bath (B) of metal (M) in a direction (D), to the action (A) of electromagnetic fields in order to influence the liquid phase of the plating metal, characterized in that there is created a helicoidal electromagnetic field (H), which acts around the axis of the bodies (F) and which induces at the same time in the bath (B) a rotating movement (R).

2. Method according to claim 1, characterized in that the magnetic field (H) is positioned in order to act in the bath and above the bath.

3. Method according to the claims 1 and 2, characterized in that the magnetic field (H) is directed in such a way that it acts in the direction (D) to enhance the thickness of the plating metal layer (M) and in the direction opposite to (D), to diminish said layer thickness.

4. Method according to the claims 1-3, characterized in that the field creating coils are embedded in housings protecting the coils from the liquid metal and that in the interior of said housings means to heat or to cool are provided for.

## Patentansprüche

1. Verfahren zum Behandeln langgestreckter Körper, insbesondere drahtförmiger Körper, während der Durchführung einer Warmmetallbeschichtung, welches Verfahren vorsieht, den Körper (F), welcher sich durch ein Bad (B) eines Metalles (M) in eine Richtung (D) bewegt, der Wirkung (A) von Elektromagnetfeldern auszusetzen, im Hinblick die Flüssig-Phase des beschichtenden Metalles zu beeinflussen, dadurch gekennzeichnet, dass man ein helikoïdales elektromagnetisches Feld (H) erzeugt, welches um die Achse des Körpers (F) wirkt und gleichzeitig im Bad (B) eine Drehbvewegung (R) erzeugt.

2. Verfahren nach Anspruch 1, dadurch gekennzeichnet, dass man das Feld (H) derart einstellt, dass es sowohl im Bad als auch über dem Bad wirkt.

3. Verfahren nach den Ansprüchen 1 und 2, dadurch gekennzeichnet, dass das Feld (H) derart ausgerichtet wird, dass es in Richtung (D) wirkt, um die Schichtdicke des Metallüberzuges (M) zu erhöhen und in entgegengesetzter Richtung zu (D) wirkt, um die Schichtdicke zu verringern.

4. Verfahren nach den Ansprüchen 1-3, dadurch gekennzeichnet, dass in Behälter eingelassene Induktoren eingesetzt werden, welche Behälter die Induktoren vor der Einwirkung des flüssigen Metalles schützen und, dass im Inneren dieser Behälter Mittel zum Heizen oder Kühlen vorgesehen sind.

FIG.1